Europäisches Patentamt

European Patent Office

Office européen des brevets

(11) Publication number: **0 072 097**
A2

# EUROPEAN PATENT APPLICATION

(21) Application number: 82303435.0

(51) Int. Cl.³: **B 01 D 29/14**

(22) Date of filing: 30.06.82

(30) Priority: 16.07.81 GB 8121963
18.08.81 GB 8125169
03.03.82 GB 8206267

(43) Date of publication of application: **16.02.83**
Bulletin 83/7

(84) Designated Contracting States: **AT BE CH DE FR GB IT
LI LU NL SE**

(71) Applicant: **DAVIDSON FILTER COMPANY LIMITED, Nero
Works The Cricket Green Hartley Wintney, Basingstoke
Hampshire (GB)**

(72) Inventor: **Davidson, Eric Brown, Nero Works The Cricket
Green, Hartley Wintney Hampshire, RG27 8QA (GB)**

(74) Representative: **Miller, Joseph et al, J. MILLER & CO.
Lincoln House 296-302 High Holborn, London WC1V 7JH
(GB)**

(54) **Filter.**

(57) A filter comprising an housing (112, 113) having an inlet
aperture (116) for a liquid to be filtered, an outlet aperture
(117) for the filtered liquid, and a filter assembly (120) which is
removably mounted in the housing (112, 113) and through
which in use the liquid flows from the inlet aperture (116) to the
outlet aperture (117), said filter assembly comprising a tubular
filter member (123) characterised by a tubular spring (121)
which is mounted radially inwardly or outwardly of the tubular
filter member (123) and which serves to force and seal opposite end portions (126) of the tubular filter member (123),
which are disposed adjacent opposite ends of its axially extending wall (127), against spaced parts (132, 133) which are
integral with or sealed to the housing.

- 1 -

0072097

"FILTER"

This invention concerns a filter for the filtration of liquids such as milk, ink and oil, the term "liquids" being used herein in a wide sense to include slurries.

In British Patent Specification No. 1,096,907 there is disclosed a filter comprising an housing having an inlet aperture for a liquid to be filtered, an outlet aperture for the filtered liquid, and a filter assembly which is removably mounted in the housing and through which in use the liquid flows from the inlet aperture to the outlet aperture, the filter assembly comprising a tubular filter member. The construction shown in British Patent Specification No. 1,096,907, however, employs a rigid structure within the tubular filter member so that this structure cannot be used to seal the tubular filter member to the housing. Separate sealing means therefore need to be provided and these sealing means are such that they do not engage opposite end portions of the tubular filter member adjacent opposite ends of the axially extending wall of the latter. Consequently, these sealing means do not support the tubular filter member closely to the said structure, while the tubular filter member, moreover, is necessarily in the form of a loose bag and cannot be constituted by a tube open at its opposite ends.

According to the present invention, there is provided a filter comprising an housing having an inlet aperture for a liquid to be filtered, an outlet aperture for the filtered liquid, and a filter assembly which is removably mounted in the housing and through which in use the liquid flows from the inlet aperture to the outlet aperture, said filter assembly comprising a tubular filter member characterised by a tubular spring which is mounted radially inwardly or outwardly of the tubular filter member and which serves to force and seal opposite end portions of the tubular filter member, which are disposed adjacent opposite ends of its axially extending wall, against spaced parts which are integral with or sealed to the housing.

Preferably, there are compression effecting means for moving one of said spaced parts towards the other spaced part so as to compress the spring and tubular filter member and thereby dislodge material deposited on the tubular filter member.

Releasable locking means are preferably provided for releasably locking the compression effecting means in an inoperative position.

Preferably the tubular filter member is substantially longer than the spring, and each of its end portions is turned back on itself over the respective end of the spring so as to extend both radially inwardly and radially outwardly of the spring.

Each said spaced part preferably comprises a locator member mounted radially inwardly or outwardly of the filter assembly, the spring sealing each said end portion both to an axially extending surface of the respective locator member and to a radially extending surface of the housing.

Thus the radially extending surface may be constituted by an internal surface of an end wall of the housing.

Each locator member may have a tapered portion to assist introduction of the filter assembly thereover.

Moreover, each locator member may also have a non-tapered portion provided with the said axially extending surface.

One of the locator members may be integral with an inlet member which is provided with the said inlet aperture.

The spring, when uncompressed, may have a maximum outside diameter which is at least one third of the length of the spring.

If the maximum outside diameter of the spring, prior to being so compressed, is at least one third of the length of the spring, the filter member is given a large surface area available to effect filtration. This reduces the effective size of the filter member and of the other components of the filter and thus reduces costs.

If desired, prior to being so compressed, the maximum outside diameter of the spring may be at least two thirds of the length of the spring. Thus the maximum outside diameter of the spring, prior to being so compressed, may be equal to or may exceed the length of the spring.

The tubular spring preferably has a cage associated therewith which supports the tubular filter member against the force of the liquid flowing therethrough. Preferably the said cage is formed by a length of wire which is wound progressively around adjoining coils of the spring from one end of the spring to the other.

The length of wire may have first portions disposed substantially axially of the spring and second portions disposed obliquely thereto, the said first and second portions being disposed on opposite radial sides of the coils of the spring.

The length of wire may be so wound about the coils of the spring as to have U-shaped loops having substantially straight portions adjacent to the said coils.

The spring may have a tapered end to facilitate its introduction into the filter member.

The tubular filter member has preferably been formed by securing together the opposite longitudinal edges of a sheet of filter material.

Alternatively, the filter member may be formed by helically winding a length of material onto the spring to form a tubular package thereon.

The housing is preferably transparent, at least in part.

Both the filter assembly and the housing may be of tubular construction and concentric with each other.

The housing may comprise two separable parts which are releasably secured together.

The invention is illustrated, merely by way of example, in the accompanying drawings, in which:-

Figure 1 is a sectional view of a first embodiment of a filter according to the present invention,

Figure 2 is a perspective view of a filter member and spring assembly for use in the filter of Figure 1,

Figure 3 is a perspective view of a modified spring which may be used in a filter according to the present invention,

Figure 4 is a sectional elevation of a second embodiment of a filter according to the present invention,

Figure 5 is a perspective view of the filter of Figure 4,

Figure 6 is a sectional elevation of a third embodiment of a filter according to the present invention, and

Figure 7 is a sectional embodiment of a fourth embodiment of a filter according to the present invention.

Terms such as "upper","lower", "left" and "right", as used in the description below, are to be understood to refer to directions as seen in the accompanying drawings.

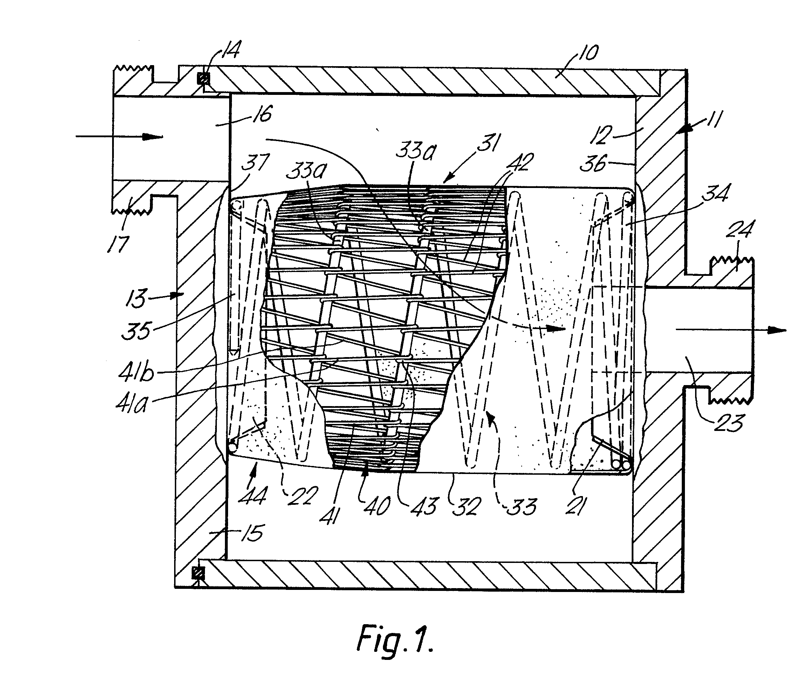

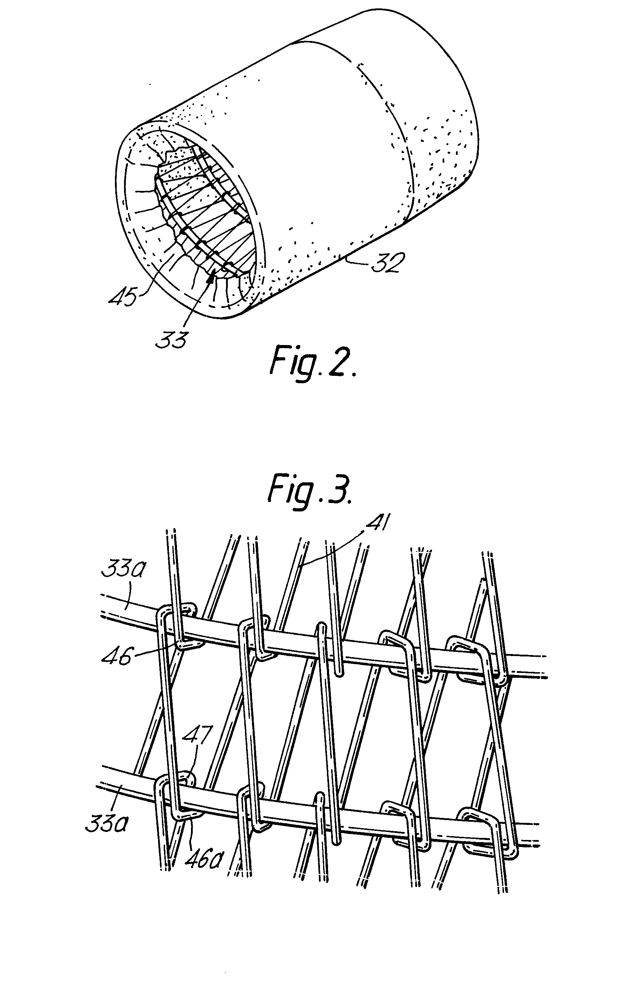

Referring first to the embodiment of Figures 1 and 2, a filter comprises a cylindrical housing 10 whose right hand end is permanently closed by an end wall 11 which has a flange 12 which is mounted closely within the housing 10. The end wall 11 and the flange 12 are bonded or otherwise permanently fixed to the housing 10. The left hand end of the housing 10 is closed by a removable end wall 13 which is sealed to the cylindrical housing 10 by an O-ring seal 14. The end wall 13 may be removably connected to the housing 10 by clips (not shown). The end wall 13 has a flange 15 which fits closely within the housing 10.

The parts 10-15 may all be made of a transparent material so that the interior of the filter can be readily seen from outside. For example, these parts may be made of methyl methacrylate ("Perspex", Registered Trade Mark) or other transparent plastics or glass material.

It is not, of course, essential for the housing 10 to be cylindrical and it could, if desired, be box-like and provided with a pivotable or removable lid to give access to the interior. The parts 10-15 may, moreover, be made of non-transparent material such as stainless steel.

The end wall 13 is provided adjacent its upper end with an inlet aperture 16 for a liquid to be filtered (e.g. milk). The end wall 13 is provided externally with a threaded boss 17 which is aligned with the inlet aperture 16. The threaded boss 17 may be connected by a hexagon nut (not shown) to an inlet pipe (not shown).

The flanges 12, 15 are respectively provided with inwardly extending frusto-conical locator bosses 21, 22 which are mounted coaxially of the housing 10 and which may be moulded integrally with the end walls 11, 13.

The end wall 11 is provided centrally thereof with an outlet aperture 23 for the filtered milk or other liquid. The end wall 11 is provided externally with a threaded boss 24 which is aligned with the outlet aperture 23. The threaded boss 24 may be connected by a hexagon nut (not shown) to an outlet pipe (not shown).

The threaded bosses 17, 24 may be formed separately from their respective end walls 13, 11 or they may be moulded integrally therewith.

Concentrically mounted in the housing 10 is a removable tubular filter assembly 31 which comprises a tubular filter member 32 and a helical spring 33, the spring 33 being mounted radially inwardly of the filter member 32 to maintain the latter in a substantially cylindrical shape. Each of the opposite end portions of the spring 33 and filter member 32 is supported by the respective locator boss 21, 22, which is mounted radially inwardly of the filter assembly 31. The filter assembly 31 has been introduced into the housing 10 by removing the end wall 13 with its flange 15 and locator boss 22, positioning the spring 33 and end wall 13 so that opposite ends 34, 35 of the spring fit over the locator bosses 21, 22 and resiliently act against the corresponding internal surfaces 36, 37 respectively

of the flanges 12, 15 of the end walls 11, 13 to hold the assembly 31 in position within the housing 10, and thereafter securing the end wall 13 in position. The tapered shape of the locator bosses 21, 22 assists their introduction into the opposite ends of the filter assembly 31. The locator bosses 21, 22 are, moreover, so sized that they fit closely into the opposite ends of the filter assembly 31 and therefore hold the filter member 32 firmly in position. As clearly shown in Figure 1, the filter assembly 31 is so disposed in the housing 10 that milk or other liquid which enters the housing 10 through the inlet aperture 16 can flow to the outlet aperture 23 only after passing through the filter member 32 so as to be filtered thereby.

The spring 33 which, in the case of use with food products, may be of stainless steel, has associated therewith a cage or sheath 40 formed by a length of stainless steel or other wire 41 which is wound in uniform zig-zag turns 42 around adjoining coils 33a of the spring 33 over the whole length of the spring 33 so that the spring coils 33a pass through turn loops 43 in the wire 41 which are directed alternately towards opposite ends of the spring 33. Each end of the wire 41 is firmly secured to the adjoining end of the spring 33 so that the wire 41 is wound progressively around the adjoining coils 33a of the spring 33 from one end of the latter to the other. The turns 42 are spaced along adjacent spring coils 33a to permit twisting of the spring 33 and consequential radial movement of the cage 40 over a limited range determined by the spacing of the turns 42. The wire 41 is applied to the spring 33 whilst the latter is twisted in the direction of unwinding and is thus radially expanded under torsion. The reaction of the spring 33, therefore, when the expansive force is removed, tends radially to contract the structure to a neutral position of rest of the spring, but this is prevented by abutment between adjoining oppositely directed loops 43 around each spring coil 33a.

As will be appreciated, the wire 41 which thus interconnects the coils 33a, together with the coils 33a themselves, supports the filter member 32 against the force of the liquid flowing therethrough. As will be seen from Figure 1, the portions 41a of the wire 41 which are disposed radially outwardly of the spring coils 33a are disposed at only a small angle to the longitudinal axis of the spring 33 and thus extend substantially axially thereof, while the portions 41b of the wire 41 which are disposed radially inwardly of the spring coils 33a are disposed at a substantial angle to the said axis and are thus obliquely disposed. The portions 41a,41b thus prevent the filter member 32 from being ballooned out to any extent under the force of the liquid so that the spring 33 provides excellent support for the filter member 32 while at the same time providing a very open structure which does not hamper filtering. Consequently, the construction is such as to protect the filter member 32 against sudden surges of the liquid, and therefore enables the filter member 32 to be made of much thinner and cheaper material than would otherwise be practicable. Since the filter member 32 is intended to be replaced frequently by a new filter member, this results in considerable cost savings and/or permits the use of much higher pressures.

The spring 33 has a tapered end 44 to facilitate its introduction into the filter member 32. Prior to being compressed so as to introduce it into the housing 10, the maximum outside diameter of the spring 33 may, as shown, be at least one third and may be at least two thirds of the length

- 8 -                                    0072097

of the spring 33.  Thus the said maximum outside diameter
may be at least equal to or may exceed the length of the
spring, thereby ensuring that the filter member 32 has a large
surface area available for filtering the milk or other liquid.
Such a large surface area increases the proportion of the
filter member which is actually used for filtering and
therefore reduces its effective cost.  Moreover, the
formation of the spring as described above provides a very
open surface for the milk or other liquid to pass therethrough.

The spring 33 may, for example, have a length of
100-200mm and a maximum outside diameter of 80mm.

In Figure 1 the turn loops 43 are generally V-shaped
but are curved or radiused at their portions adjacent the
coils 33a so as to lie closely adjacent to the latter. As
shown in Figure 3, however, the wire 41 may have turn loops
46 which are U-shaped rather than V-shaped and which have
substantially straight portions 46a adjacent to the coils
33a. The construction shown in Figure 3 provides larger gaps
47 between the wire 41 and the coils 33a and this makes it
easier to wash the spring 33 thoroughly so as to prevent
the accumulation of deposits between the wire 41 and the
coils 33a.

The filter member 32 is formed by securing together the
opposite longitudinal edges of a sheet of filter material.
Since the length of this sheet is substantially less than its
width, the cost of securing these opposite longitudinal edges
together is low.  The filter material may be non-woven, long
fibred, wet-strengthend filter paper, e.g. of the kind used
in tea bags, in which case the longitudinal edges may be
heat sealed to each other.  Alternatively, the filter member
32 may be made of felt, woven cotton, polyester material, or heavy quality viscose material sealed by a hot inert adhesive (health approved). If used for the filtering of milk, the effective surface area of the filter member 32 should be at least 90 square inches (581 square centimetres) and allow the passage of globules up to 50 microns in size but prevent the passage of foreign matter of 70 microns or more in particle size.

The filter member 32 is open at at least one portion thereof to receive the spring 33 and, as clearly shown in Figure 2, is substantially longer than the spring 33. The open end portion of the filter member 32 (or each end portion thereof if both end portions are open) is turned back on itself and is tucked into the spring as indicated at 45 so as to extend both internally and externally of the spring. Thus the filter member 32 does not require sewing or heat sealing at either end thereof.

As will be appreciated, the spring 33, in addition to resiliently holding the filter assembly 31 in position in the housing 10 also forces and seals each of the opposite end portions of the filter member 32, which are adjacent opposite ends of its axially extending wall, against both the axially extending frusto-conical surfaces of the locator bosses 21, 22 and the radially extending internal surfaces 36, 37.

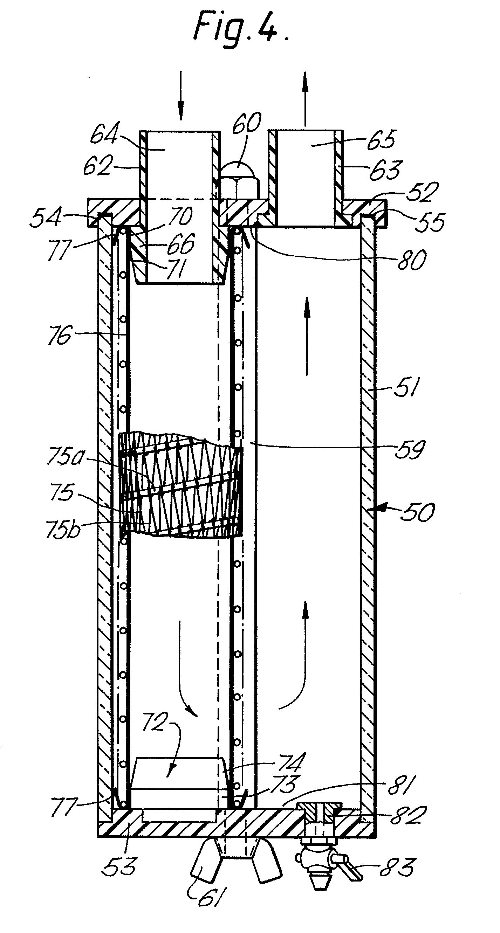

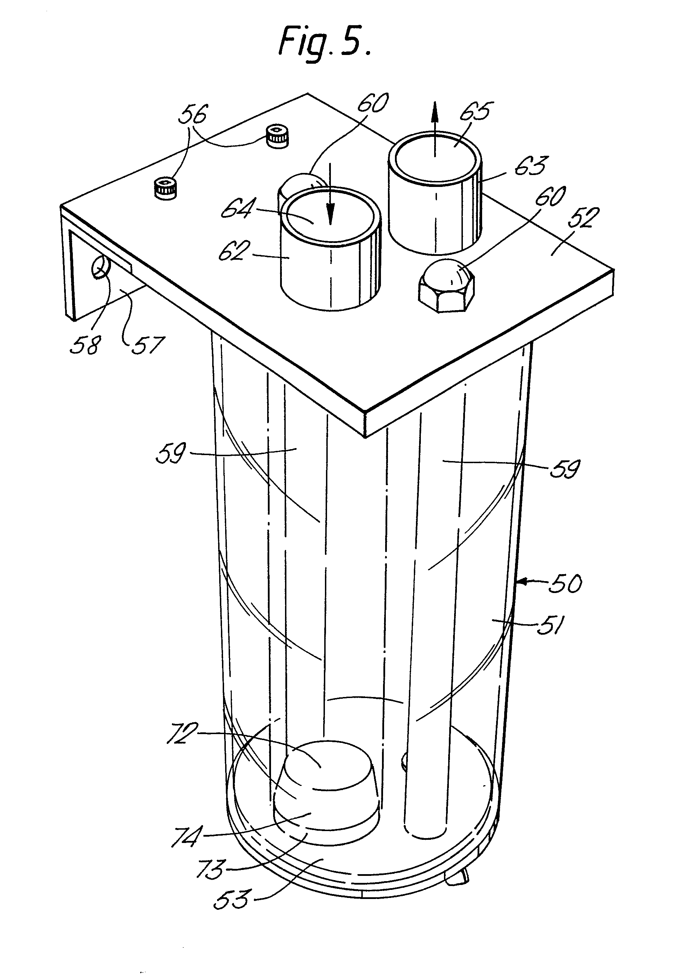

Referring now to the embodiment of Figures 4 and 5, a filter (e.g. for filtering milk) has a cylindrical housing 50 which comprises a transparent cylindrical member 51, an upper end wall 52, and a lower end wall 53. The lower end wall 53 is integral with or permanently secured to the cylindrical member 51. The cylindrical member 51 is mounted in an annular recess 54 in the upper end wall 52 and is sealed therein by a rubber or neoprene O-ring seal 55.

The upper end wall 52 is bolted by bolts 56 to a bracket 57. The bracket 57 has holes 58 therein to enable the bracket 57 to be secured to a wall.

The upper and lower end walls 52, 53 are releasably secured together by two rods 59. The upper ends of the rods 59 have nuts 60 screwed onto them which engage the upper end wall 52. The lower ends of the rods 59 are arranged to have wing nuts 61 screwed onto them which are engageable with the lower end wall 53.

Mounted in (or integral with) the upper end wall 52 is a tubular inlet member 62 and a tubular outlet member 63. The tubular inlet member 62 provides an inlet aperture 64 for the inflow of milk to be filtered, while the tubular outlet member 63 provides an outlet aperture 65 for the filtered milk.

The tubular inlet member 62 is integral with a tubular filter assembly locator member 66. The locator member 66 has a cylindrical portion 70, which is disposed immediately adjacent to the upper end wall 52, and a frusto-conical portion 71 at its end remote from the upper end wall 52. Mounted in (or integral with) the lower end wall 53 is a filter assembly locator member 72 whose shape is similar to and which is axially aligned with the locator member 66. Thus the locator member 72 has a cylindrical portion 73 immediately adjacent to the lower end wall 53 and a frusto-conical portion 74 remote therefrom.

Releasably mounted on and supported by the locator members 66, 72 is a filter assembly comprising a helical spring 75 and a tubular filter member 76 mounted radially inwardly thereof. The spring 75 has coils 75a which are interconnected by wire 75b and is of the same construction as the spring 33 except that it is of cylindrical shape throughout its length. Its length may, for example, be 11¼" (28.58 cms)

0072097

and its diameter 2½" (6.35 cms). The tubular filter member 76 is open at each of its opposite ends and has a length substantially greater than that of the spring 75, the filter member 76 being formed as described above in relation to the filter member 32. As indicated by the arrows in Figure 3, the milk which enters through the inlet aperture 64 flows to the outlet aperture 65 after passing through the filter member 76 so as to be filtered thereby. As will be appreciated, the filter member 32 is supported against the force of the milk flowing therethrough by the coils 75a and wire 75b.

As will be seen in Figure 4, each of the end portions 77 of the filter member 76, which are disposed adjacent opposite ends of its axially extending wall, is turned back on itself over the respective end of the spring 75 so as to extend both radially inwardly and radially outwardly of the spring 75. The spring 75 thus serves to force and seal the end portions 77 against both the axially extending external surfaces of the cylindrical portions 70, 73 of the locator members 66, 72 and also against the radially extending internal surfaces 80, 81 of the end walls 52, 53 respectively. The tapered portions of the locator members 66, 72, which are constituted by the frusto-conical portions 71, 74 are provided to enable the filter assembly to be introduced more readily thereover.

The lower end wall 53 has a drain member 82 mounted therein (or integral therewith), flow through the drain member 82 being controlled by an on-off valve 83.

When it is desired to replace an old filter member 76, the wing nuts 61 are undone and the assembly comprising the cylindrical member 51, lower wall member 53 and locator member 72 is pulled downwardly away from the upper end wall 52 which will remain secured to the wall. The filter assembly comprising the spring 75 and the filter member 76 will then be removed and the old filter member 76 will be withdrawn from the spring 75 and thrown away. After a new filter member 76 has been placed in position radially inwardly of the spring 75 and the end portions 77 have been turned back over the ends of the spring 75, the filter assembly of the spring 75 and the filter member 76 is placed in position on the locator member 72, and the cylindrical member 51 is introduced into the annular recess 54 simultaneously with the introduction of the filter assembly over the locator member 66. The wing nuts 61 are then tightened up so that in the fully assembled state the spring 75 is compressed.

The cylindrical member 51, upper and lower end walls 52, 53, inlet and outlet members 62, 63, rods 59, and locator members 66, 72 may all be made of a methylpentene polymer such as that sold under the Trade Name TPX, which is a transparent plastics material. Alternatively, the cylindrical member 51 may be made of methylpentene polymer and the parts 52, 53, 59, 62, 63, 66, 72 may be made of nylon.

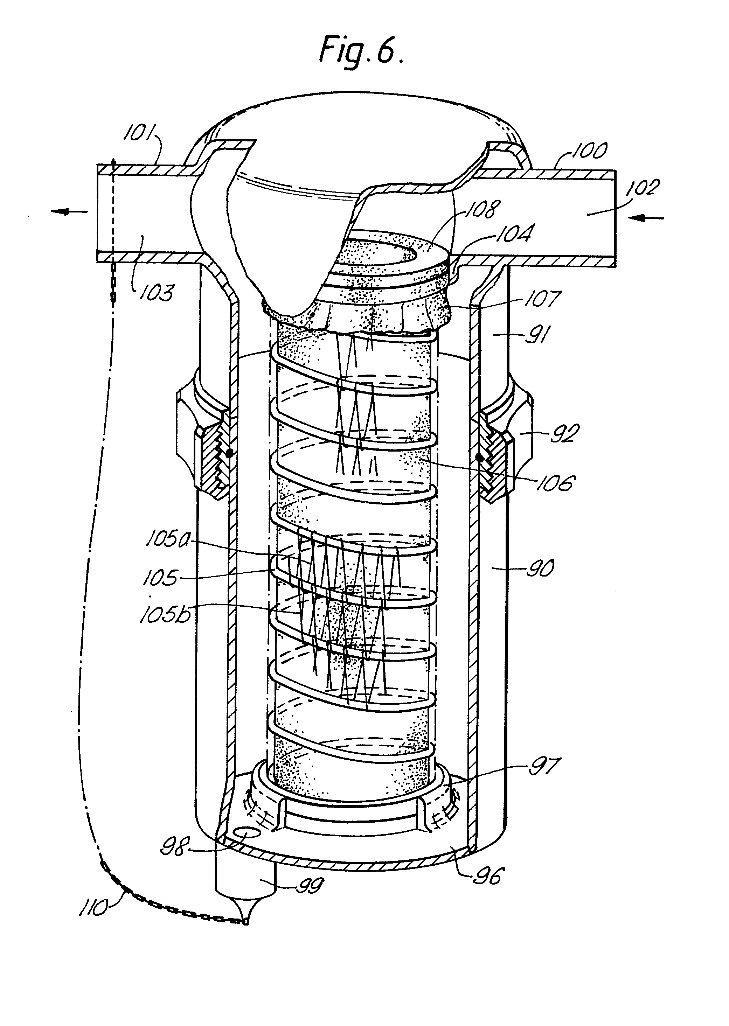

Referring now to the embodiment of Figure 6, a filter (e.g. for filtering milk) has a two part cylindrical housing 90, 91 comprising a transparent lower cylindrical member 90 made of a plastics material such as a methylpentene polymer and an opaque upper cylindrical member 91 made of a plastics material such as acrylonitrile butadiene styrene sold under the Trade Name ABS. The cylindrical members 90, 91 are releasably interconnected by a locking ring 92.

The lower cylindrical member 90 has a lower end wall 96 centrally of which there is formed, integrally or otherwise, an annular filter assembly locator member 97. The lower end wall 96 has a drain aperture 98 therein flow through which is controlled by a drain valve 99.

The upper cylindrical member 91 is formed integrally with a tubular inlet member 100 and a tubular outlet member 101 which are respectively connected to pipework (not shown) so that the upper cylindrical member 91 is supported thereby. The tubular inlet member 100 provides an inlet aperture 102 for the inflow of milk to be filtered, while the tubular outlet member 101 provides an outlet aperture 103 for the filtered milk. The upper cylindrical member 91 is also provided with an internal flange 104.

Releasably mounted in and supported by the locator member 97 and the internal flange 104 is a filter assembly comprising a helical spring 105 and a tubular filter member 106 which is mounted radially inwardly thereof, the filter assembly 105, 106 being disposed concentrically of the housing 90, 91. The spring 105 has coils 105a which are interconnected by wire 105b and is of the same construction as the spring 75, except that its diameter may be 3¾" (9.53 cms). The tubular filter member 106 is open at each of its opposite ends and has a length substantially greater than that of the spring 105, the filter member 106 being formed and arranged as described above in relation to the filter member 32. Thus each of the end portions of the filter member 106, which are disposed adjacent opposite ends of its axially extending wall, is turned back on itself over the respective end of the spring 105 so as to have parts which extend both radially inwardly and radially outwardly of the spring 105. The end portion of the filter member 106 at the lower end of the spring 105 has such a radially outwardly extending part which is trapped between and sealed to the spring 105 and the internal surface of the locator member 97. The end portion of the filter member 106 at the upper end of the spring 105 has a radially outwardly extending part 107 which is trapped between and sealed to the spring 105 and a ring 108 which can be placed on and removed from the upper end of the spring. The ring 108 seats against a tapered internal surface of the internal flange 104.

As indicated by the arrows in Figure 6, the milk which enters through the inlet aperture 102 passes downwardly through the interior of the filter assembly 105, 106, flows radially outwardly through the filter member 106 so as to be filtered thereby, and then passes upwardly externally of the filter assembly 105, 106 so as to pass out through the outlet aperture 103. As will be appreciated, the filter member 106 is supported against the force of the milk flowing therethrough by the coils 105a and wire 105b.

When it is desired to replace an old filter member 106, the drain valve 99 is opened by pulling on a chain 110 so as to drain away any milk left in the housing 90, 91. The locking ring 92 is then unscrewed and the lower cylindrical member 90, together with the filter assembly 105, 106, is removed from the upper cylindrical member 91. The filter assembly 105, 106 is then removed from the locator 97, the ring 108 is removed, and the old filter member 106 is withdrawn frok the spring 105 and thrown away. After a new filter member 106 has been placed in position radially inwardly of the spring 105 and the end portions of the filter member 106 have been turned back over the ends of the spring 105, the ring 108 is placed back on the upper end of the filter assembly 105, 106 and the latter is placed in position in the locator member 97. The lower cylindrical housing 90 is then reconnected to the upper cylindrical housing 91 by tightening up the locking ring 92 while ensuring that the ring 108 is appropriately located within the internal flange 104.

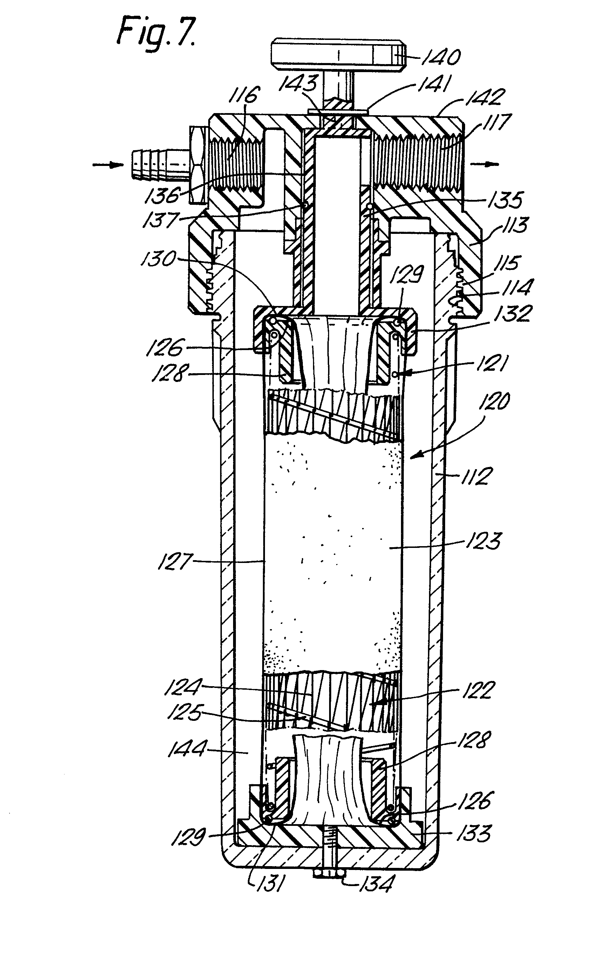

Referring now to the embodiment of Figure 7, a filter (e.g. for filtering milk or water) has a two part cylindrical housing 112, 113 comprising a transparent lower cylindrical member 112 made of a plastics material such as a polycarbonate material and an opaque upper cylindrical member 113 made of a plastics material such as acrylonitrile butadiene styrene. The lower cylindrical member 112 is externally threaded at 114 so that it may be screwed into and out of an internally threaded portion 115 of the upper cylindrical member 113. The upper cylindrical member 113 has an inlet aperture 116 for the inflow of milk or water to be filtered, and an outlet aperture 117 for the filtered milk or water.

Removably mounted within the housing 112, 113 by means described below is a filter assembly 120 through which in use the milk or water flows from the inlet aperture 116 to the outlet aperture 117. The filter assembly 120 comprises a tubular helical spring 121 which is of the same construction as the springs 75, 105 and which thus has associated therewith a cage 122. The latter supports a tubular filter member 123, which forms part of the filter assembly 120, against the force of the milk of water flowing therethrough, the spring 121 being mounted radially inwardly of the tubular filter member 123. As in the constructions described above, the cage 122 is formed by a length of wire 124 which is wound progressively around adjoining coils 125 of the spring 121 from one end of the spring 121 to the other. Each of the opposite ends of the spring 121 is mounted in an end cap 128 which extends both radially inwardly and radially outwardly of the spring 121, the end face of each end cap 128 being provided with a sealing ring 129 which extends proud of the said end face.

The tubular filter member 123 is open at each of its opposite ends and has a length substantially greater than that of the spring 121. Each of the opposite end portions 126 of the tubular filter member 123, which are disposed adjacent opposite ends of its axially extending wall 127, is turned back on itself over the respective end cap 128 and thus over the respective end of the spring 121 so as to extend both radially inwardly and radially outwardly of the spring 121. The spring 121, by virtue of its action on the end caps 128 whose sealing rings 129 engage the opposite end portions 126, thus serves to force and seal the opposite end portions 126 against surfaces 130, 131 of spaced apart upper and lower cup-shaped parts 132, 133 respectively of nylon or other plastics material within which the opposite ends of the filter assembly 120 are releasably mounted, the surfaces 130, 131 extending radially of the filter assembly 120.

The lower cup-shaped part 133 is sealingly clamped to the bottom of the lower cylindrical member 112 by a nut and bolt 134. The upper cup-shaped part 132, however, is integrally formed at the lower end of a tubular plunger 135 which is slidably mounted within a cylindrical hole 136 in the upper cylindrical member 113. The tubular plunger 135 carries an O-ring 137 which sealingly engages the hole 136 so that the tubular plunger 135 is sealed to the upper cylindrical member 113.

The tubular plunger 135 has a handle 140 and a transversely extending pin 141 which, when positioned as shown in Figure 7, engages the top surface 142 of the upper cylindrical member 113 so as to releasably lock the tubular plunger 135 in an inoperative position in which it cannot be depressed. The handle 140 may, however, be rotated to an operative position (not shown) in which the pin 141 is aligned with a slot 143 in the upper cylindrical member 113 to enable the tubular plunger 113 to be depressed. Such depression moves the upper cup-shaped part 132 towards the lower cup-shaped part 133 so as to compress the spring 121 and the tubular filter member 123 and thereby dislodge material which becomes deposited on the tubular filter member 123 during the filtration. Such material will thus be shaken off the tubular filter member 123 and into the bottom portion of the annular space 144 between the lower cylindrical member 112 and the filter assembly 120. This will enable a tubular filter member 123 to be used for a greater length of time than would otherwise be possible prior to its replacement.

As will be appreciated, the milk or water which enters through the inlet aperture 116 passes to the annular space 144 and then passes radially through the tubular filter member 123 to the interior thereof, the cage 122 supporting the tubular filter member 123 against the force of the milk or water. The filtered milk or water then passes out through the outlet aperture 117.

When it is desired to replace an old filter member 123, it is merely necessary to separate the parts 112, 113, remove the filter assembly 120 from the cup-shaped parts 132, 133, replace the old filter member 123 with a new filter member, position the filter assembly 120 in the lower cup-shaped part 133, and reconnect the parts 132, 133 so that the filter assembly is located within the upper cup-shaped part 132.

As will be appreciated, the constructions shown in the drawings provide a simple and inexpensive means of holding the filter member in position while sealing it effectively and thus preventing leakage.

Moreover, a large number of filter members can be formed from a single sheet of filter material merely by securing the longitudinal edges of the sheet together, e.g. by heat sealing, so as to form a tubular member, and then cutting this tubular member transversely at a number of places so as to form the individual filter members. The filter members can therefore be produced very inexpensively.

In the drawings, the spring is shown as supporting only a single tubular filter member. However, the spring could, if desired, support two or more tubular filter members, e.g. of "tea bag" material. For example, if the flow of liquid is radially outwardly directed from the centre of the filter assembly, there could be a relatively coarse tubular filter member which is disposed radially inwardly of the spring and whose end portions are turned back so as to be arranged radially outwardly of the spring, and a relatively fine tubular filter member which is disposed both radially outwardly of the spring and radially outwardly of the said turned back end portions, the relatively fine tubular filter member having end portions which are turned back so as to be arranged radially inwardly of the spring. The filter members could be made of the same or of different materials. As will be appreciated in this construction, however, only the relatively coarse filter member would be supported by the spring cage against the force of the liquid flowing therethrough.

One of the filter members mentioned in the preceding paragraph, or the sole filter member if only one is used, could be formed by helically winding a length of polypropylene or other thread onto the spring so as to form thereon a tubular package similar in construction to a ball of string and adapted for the flow of the liquid therethrough in a radially inward direction. The tubular package would not extend to the ends of the spring, but the latter would be provided with end caps which would engage the tubular package. The end caps would thus, in operation, engage the locator members in which the spring assembly is held. Very fine filter passages would thus exist through the tubular package. The yarn could, moreover, if desired, be impregnated with a liquid for killing bacteria or otherwise treating the liquid being filtered.

Furthermore, the tubular package could have two or more layers to effect progressively finer filtering. For example, a first layer of thread adjacent to the spring could remove particles exceeding 10 microns in size; a second layer of thread, disposed on the said first layer, could remove particles exceeding 50 microns in size; and a third layer of thread, disposed on the said second layer, could remove particles exceeding 100 microns in size.

The filter member could, moreover, have two or more layers of different materials. For example, it could have a central layer of charcoal cloth bonded to and sandwiched between outer layers of "tea-bag" paper. The charcoal cloth, which is a flexible strong fabric consisting solely of highly absorbent charcoal fibres, would be provided because it has a high rate of adsorption of objectionable smells and vapours, while the "tea-bag" paper layers would be provided both to strengthen the charcoal cloth and to filter out solid material in suspension in the liquid being filtered.

- 20 -

C L A I M S

1.   A filter comprising an housing (112,113) having an inlet
aperture (116) for a liquid to be filtered, an outlet aperture
(117) for the filtered liquid, and a filter assembly (120)
which is removably mounted in the housing (112,113) and
through which in use the liquid flows from the inlet aperture
(116) to the outlet aperture (117), said filter assembly
comprising a tubular filter member (123) characterised by
a tubular spring (121) which is mounted radially inwardly or
outwardly of the tubular filter member (123) and which serves
to force and seal opposite end portions (126) of the tubular
filter member (123), which are disposed adjacent opposite
ends of its  axially extending wall (127), against spaced parts
(132,133) which are integral with or sealed to the housing.

2.    A filter as claimed in claim 1 characterised by
compression effecting means (135,140) for moving one of said spaced
parts (132) towards the other spaced part (133) so as to compress
the spring (121) and tubular filter member (123) and thereby
dislodge material deposited on the tubular filter member.

3.     A filter as claimed in claim 2 characterised by
releasable locking means (141) for releasably locking the
compression effecting means (135,140) in an inoperative
position.

4.     A filter as claimed in any preceding claim characterised
in that the tubular filter member  (123) is substantially longer
than the spring (121) and each of its end portions is turned
back on itself over the respective end of the spring (121)
so as to extend both radially inwardly and radially outwardly
of the spring (121).

- 21 -

5.     A filter as claimed in any preceding claim characterised
in that each said spaced part comprises a locator member
(66,72) mounted radially inwardly or outwardly of the
filter assembly, the spring (75) sealing each said end
portion (77) both to an axially extending surface (70,73)
of the respective locator member (66,72) and to a radially
extending surface (80,81) of the housing (52,53).

6.     A filter as claimed in claim 5 characterised in that
each locator member (66,72) has a tapered portion (71,74)
to assist introduction of the filter assembly (75,76) thereover.

7.     A filter as claimed in any preceding claim characterised
in that the spring (33), when uncompressed, has a maximum
outside diameter which is at least one third of the length
of the spring.

8.     A filter as claimed in any preceding claim characterised
in that the tubular spring(121) has a cage (122) associated
therewith which supports the tubular filter member against
the force of the liquid flowing therethrough.

9.     A filter as claimed in claim 8 characterised in
that the said cage is formed by a length of wire (124) which
is wound progressively around adjoining coils (125) of the spring
(121) from one end of the spring (121) to the other.

10.     A filter as claimed in claim 9 characterised in that
the length of wire (41) has first portions (41a) disposed
substantially axially of the spring and second portions (41b)
disposed obliquely thereto, the said first and second portions
(41a, 41b) being disposed on opposite radial sides of the coils
(33a) of the spring (33).

11.     A filter as claimed in claim 9 or 10 characterised in
that the length of wire (41) is so wound about the coils (33a) of the
spring (33) as to have U-shaped loops (46) having substantially
straight portions (46a) adjacent to the said coils (33a).

12.      A filter as claimed in any preceding claim characterised in that the spring (33) is mounted radially inwardly of the tubular filter member (32) and has a tapered end (44) to facilitate its introduction into the tubular filter member (32).

13.      A filter as claimed in any preceding claim characterised in that the tubular filter member has been formed by securing together the opposite longitudinal edges of a sheet of filter material.

14.      A filter as claimed in claim 1 or 2 characterised in that the tubular filter member is formed by helically winding a length of material onto the spring to form a tubular package thereon.

15.      A filter as claimed in any preceding claim characterised in that the housing (112,113) is transparent at least in part.

16.      A filter as claimed in any preceding claim characterised in that the housing comprises two separable parts (112,113) which are releasably secured together.

Fig.1.

Fig. 2.

Fig. 3.

# Fig.4.

0072097

Fig.5.

Fig.6.

Fig.7.